# EUROPÄISCHE PATENTSCHRIFT

(11) **EP 0 392 089 B1**
(45) Veröffentlichungstag und Bekanntmachung des Hinweises auf die Patenterteilung: **13.07.1994**
(21) Anmeldenummer: 89123282.9
(22) Anmeldetag: 15.12.1989
(51) Int. Cl.: H02G 15/04

(54) **Kabelende-Abschliessvorrichtung**
Cable end closure device
Dispositif de fermeture d'une extrémité de câble

(30) Priorität: 10.04.1989 DE 3911688
(43) Veröffentlichungstag der Anmeldung: 17.10.1990
(73) Patentinhaber: Sichert GmbH & Co., D-12277 Berlin (DE)
(72) Erfinder: Hesse, Hans-Hermann, Dipl.-Ing., D-1000 Berlin 48 (DE); Frewer, Raimund, Dipl.-Ing., D-5840 Schwerte 1 (DE); Wiederer, Franz, D-1000 Berlin 44 (DE); Perschon, Helmut, D-1000 Berlin 48 (DE)
(74) Vertreter: Vogeser, Werner, Dipl.-Ing.

(56) Entgegenhaltungen:
- EP-A- 0 240 295
- WO-A-87/00697
- DE-U- 1 991 584
- FR-A- 1 278 132
- US-A- 3 209 069

## Beschreibung

Die Erfindung betrifft eine Vorrichtung zum feuchtigkeitsdichten Abschließen eines kabelendes.

Bei einer bekannten Abschließvorrichtung dieser Art besteht die das Kabelende übergreifende Kappe aus wärmeschrumpfendem Material, wobei die Innenseite dieser Kappe zudem mit einem Heiß-Schmelzkleber beschichtet ist, der nach dem Schrumpfvorgang seine flexiblen Eigenschaften behält. Ein Nachteil dieser bekannten Abschließvorrichtung besteht in der kostenintensiven Montageweise. Demnach ist es nämlich vor dem eigentlichen Aufschrumpfen der Kappe auf das Kabelende notwendig, das Kabelende zu reinigen. Für den Schrumpfvorgang ist ein Propangasbrenner erforderlich. Insgesamt erfordert also die Montage dieser bekannten Abschließvorrichtung ein fachgerechtes Vorgehen. Ein weiterer Nachteil dieser bekannten Abschließvorrichtung besteht darin, daß bei einer Weiterverarbeitung das Kabelende mit der Schrumpfkappe vom Kabel abgetrennt werden muß.

Aus der US-A-3 209 069 ist eine Vorrichtung zum feuchtigkeitsdichten Abschließen des Kabelende mit einer das Kabelende übergreifenden Kappe bekannt, bei der das Kabel durch eine Buchse, die über eine Kupplungseinrichtung in Form eines Gewindes mit dem offenen Ende einer Kappe derart zusammengeschlossen ist, daß eine zwischen Kappe und Buchse vorgesehene konisch zulaufende Fläche den Kappen-Innenraum in den das Kabelende hineinragt, dicht verschließt.

Aus der Fr-A-1 278 132 ist eine Vorrichtung zum feutigkeitsdichten Abschließen eines Kabels bekannt, bei der ein das Kabel umschließender Dichtungsring zwischen einer Mutter und einer Hülse eingesetzt ist.

Der Erfindung liegt die Aufgabe zugrunde, eine Abschließvorrichtung der eingangs genannten Art zu schaffen, die auch ohne den Einsatz von Hilfsmitteln einfach montierbar ist, und die sich zudem für eine Wiederverwendung eignet.

Gelöst wird diese Aufgabe durch die im Anspruch 1 angebenen Merkmale.

Demnach ist es vorgesehen, die Kappe der gattungsgemäßen Abschließvorrichtung mit einer Buchse so zu kombinieren, daß ein zwischen Kappe und Buchse angeordneter Dichtungsring den Kappeninnenraum dicht verschließt, in welchen das Kabelende hineinragt. Buchse und Kappe sind über eine Kupplungseinrichtung miteinander zusammengeschlossen und bilden damit eine Vorrichtung, die vor Ort ohne Hilfsmittel zum feuchtigkeitsdichten Abschließen eines Kabelendes einsetzbar ist, und die aufgrund ihres Aufbaus mehrfach wiederverwendbar ist.

Vorteilhafterweise sind an der Innenwandung der Buchse sowie an der Innenwandung der Kappe konische Dichtungsringflächen ausgebildet, zwischen welche der Dichtungsring eingesetzt ist, der den Kappeninnenraum dicht verschließt, wenn bei über die Buchse durch den Dichtungsring hindurch in die Kappe eingeführtem Kabelende die Buchse mittels der Kupplungseinrichtung in Richtung der gemeinsamen Buchsen-Kappen-Mittenlängsachse gegen die Kappe derart verspannt ist, daß der mit ihrer Mittenlängsachse koaxial zur Buchsen-Kappen-Mittenlängsachse angeordnete Dichtungsring das Kabelende unter Preßeinwirkung der Dichtungsringflächen dicht umschließt, wobei Kappe und Buchse zum Einführen des Kabelendes mittels der Kupplungseinrichtung in einer Bereitschaftsstellung gehalten sind, in welcher die Dichtungsringflächen der Kappe und der Buchse axial so weit voneinander beabstandet sind, daß der bezüglich seines Innendurchmessers an den Außendurchmesser des Kabelendes angepaßte Dichtungsring ohne nennenswerte Preßeinwirkung durch die Dichtungsringflächen axial und radial fixiert ist.

Die Kupplungseinrichtung für die erfindungsgemäße Abschließvorrichtung kann in unterschiedlichster Weise realisiert sein, nämlich beispielsweise in Form einer Überwurfmutter, die entweder an der Buchse oder der Kappe drehbar angeschlossen ist und auf ein Außengewinde am gegenüberliegenden Vorrichtungsteil (Buchse oder Kappe) aufschraubbar ist. Gemäß einer besonders vorteilhaften Weiterbildung der Erfindung besteht die Kupplungseinrichtung aus einem fest mit der Kappe verbundenen ringförmigen Flanschansatz mit Innengewinde, der auf einen Außengewindeabschnitt am dem offenen Kappenende gegenüberliegenden Buchsenende aufgeschraubt ist. Die Kupplungseinrichtung kann aber auch in Art eines Bajonettverschlusses ausgebildet sein.

Zum Festlegen der Bereitschaftsstellung der erfindungsgemäßen Abschließvorrichtung ist vorteilhafterweise eine Arretiereinrichtung vorgesehen, etwa in Form eines radial nach innen vorstehenden Vorsprungs am Kappen-Flanschansatz, wobei dieser Vorsprung einen radial von der Buchsenmantelfläche vorstehenden Ring übergreift. Neben der Festlegung der Bereitschaftsstellung durch eine derartige Arretiereinrichtung wird durch diese auch ein unverlierbares Verbinden von Buchse und Kappe geschaffen.

Weiterhin ist vorteilhafterweise eine Anschlageinrichtung zum Festlegen der Abschließstellung vorgesehen, in welcher der Dichtungsring den Kappeninnenraum, in welchen das Kabelende hineinragt, dicht verschließt. Gemäß einer vorteilhaften Ausführungsform umfaßt die Anschlageinrichtung einen Ringansatz am Buchseninnenende in Verlängerung des Buchsenaußengewindeabschnitts sowie radial außerhalb der konischen Buchsendichtungsringfläche, wobei der Ringansatz zur Festlegung der Abschließstellung in Eingriff mit einer Ringschulter gelangt, die radial außerhalb der konischen Dichtungsringfläche der Kappe an deren Innenwandung angeordnet ist.

Um die Gewinde im Verbindungsbereich von Kappe und Buchse zumindest in der Abschließstellung vor Verschmutzung zu schützen, ist es vorteilhafterweise vorgesehen, auf der Mantelfläche der Buchse einen radial vorstehenden Ringansatz anzubringen, der vom Außenrand des Flanschansatzes bündig übergriffen wird.

Um zu gewährleisten, daß das Kabelende beim Einführen in die erfindungsgemäße Vorrichtung den Dichtungsring in gestreckter Form erreicht, sind an der Buchseninnenwandung Führungsrippen ausgebildet, die in radialer Richtung nach innen vorstehen sowie axial verlaufen. Die axial verlaufenden Kanten dieser Führungsrippen umschließen einen ringförmigen Raum zur Führung des Kabelendes. Zur Erleicherung der Einführung des Kabelendes in das außenliegende Einsteckende der Buchse sind die Führungsrippen mit einer Anfasung versehen, die zum Buchseninnern hin abfällt.

Zur Erleichterung der Montage der Abschließvorrichtung am Kabelende vor Ort sind die Außenflächen von Buchse und Kappe mit einem Profil versehen, das einen kraftschlüssigen Angriff der Hände einer Bedienungsperson gestattet. Vorteilhafterweise besteht dieses Profil aus Rippen, die im Querschnitt betrachtet hexagonal angeordnet sind und in axialer Richtung verlaufen. Diese Profilkonfiguration gestattet zudem den Angriff eines Werkzeugs bei der Montage, insbesondere dann, wenn beim Vorgang des Entfernens der Vorrichtung vom Kabelende Probleme beim Lösen der Schraubverbindung auftreten sollten. Demselben Zweck dient ein Mehrkantenansatz am Außenende der Kappe, das ebenfalls zum Angriff eines Werkzeugs verwendet werden kann.

Weiterhin ist es vorteilhafterweise vorgesehen, sämtliche Vorrichtungsteile bis auf den elastomeren Dichtungsring im Spritzgußverfahren herzustellen, insbesondere im Kunststoff-Spritzgußverfahren.

Nachfolgend soll die Erfindung anhand eines in der Zeichnung dargestellten Ausführungsbeispiels näher beschrieben werden. In der Zeichnung zeigen:
- Fig. 1: eine Ansicht einer bevorzugten Ausführungsform der bestimmungsgemäß an ein Kabelende angebrachten erfindungsgemäßen Abschließvorrichtung;
- Fig. 2: einen Längsschnitt der Abschließvorrichtung von Fig. 1 und
- Fig. 3: eine Ansicht der Abschließvorrichtung von Fig. 1 in Richtung des Pfeils X.

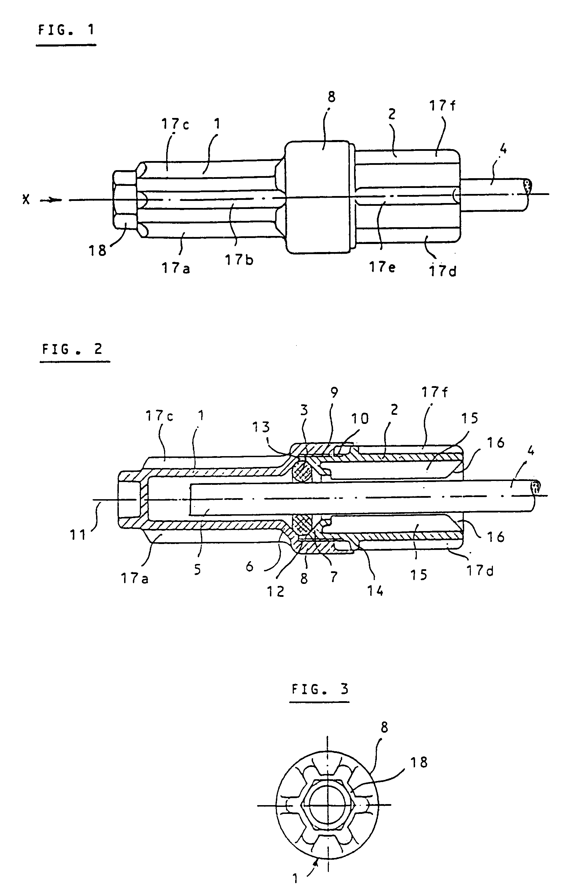

Die in den Figuren 1 und 2 dargestellte Kabelende-Abschließvorrichtung besteht aus einer Kappe 1, die mittels einer nachstehend näher beschriebenen Kupplungseinrichtung mit einer Buchse 2 zusammengeschlossen ist sowie einem Dichtungsring 3, der zwischen Kappe 1 und Buchse 2 axial und radial fixiert eingesetzt ist. Diese Abschließvorrichtung dient zum feuchtigkeitsdichten Abschließen des Endes 5 eines Kabels 4. In den Figuren 1 und 2 ist die Abschließvorrichtung in ihrer Abschließstellung gezeigt, in welcher ein Kabel 4 mit seinem Ende 5 die Buchse 2 sowie den Dichtungsring 3 durchsetzt und in den Innenraum der Kappe 1 hineinragt. In dieser Stellung befindet sich der Dichtungsring 3 in Dichtungsanlage mit dem Mantel des Kabelendes 5 sowie mit konischen Dichtungsringflächen 6 und 7, welche an der Innenwandung der Kappe 1 bzw. der Buchse 2 ausgebildet sind.

Mit anderen Worten umschließt der Dichtungsring 3 bei in Abschließstellung befindlicher Abschließvorrichtung unter Preßeinwirkung der Dichtungsringflächen 6, 7 das Kabelende 5 derart, daß der Innenraum der Kappe 1 und damit das in diesen Innenraum hineinragende Kabelende 5 dicht verschlossen ist.

Die Abschließstellung der Abschließvorrichtung wird also dadurch erzielt, daß die Kappe 1 unter Zwischenlage des Dichtungsrings 3 mit der Buchse 2 verspannt ist. Bewirkt wird die Verspannung der Kappe 1 mit der Buchse 2 durch oben erwähnte Kupplungseinrichtung. Die Kupplungseinrichtung umfaßt auf Seiten der Kappe einen ringförmigen Flanschansatz 8, dessen Innenwandung mit einem Gewinde versehen ist. Der Flanschansatz 8 umgreift das Ende der dem offenen Kappenende gegenüberliegenden Buchse 2. Auf der Mantelfläche 10 des von dem Flanschansatz 8 umgriffenen innenliegenden Buchsenendes ist ein Gewinde vorgesehen, so daß Kappe 1 und Buchse 2 in Richtung ihrer gemeinsamen Mittenlängsachse 11 relativ zueinander verstellbar sind, nämlich durch eine Drehbewegung der Kappe 1 bezüglich der Buchse 2.

Zum Festlegen der Abschließstellung der Abschließvorrichtung werden die Kappe 1 und die Buchse 2 bis auf Anschlag miteinander verschraubt. Als Anschlageinrichtung ist buchsenseitig ein Ringansatz 12 und kappenseitig eine Ringschulter 13 vorgesehen. Der Ringsansatz 12 ist am Buchseninnenende in Verlängerung des Buchsen-Außengewindeabschnitts sowie radial außerhalb der konischen Buchsen-Dichtungsringfläche 7 vorgesehen. Der Ringansatz 12 ist radial außerhalb der konischen Dichtungsringfläche 6 der Kappe 1 vorgesehen. Zur Festlegung der Abschließstellung der Abschließvorrichtung gelangt der Ringansatz 12 beim Verschrauben der Kappe 1 mit der Buchse 2 in Eingriff mit der Ringschulter 13.

Um ein Eindringen etwa von Schmutz in den Gewindebereich zwischen Flanschansatz 8 und innenliegendem Buchsenende zu verhindern, ist auf der Buchsenmantelfläche ein radial vorstehender Ringansatz 14 ausgebildet, der in der Abschließstellung vom ringförmigen Kappen-Flanschansatz 8 bündig übergriffen wird.

Die Dichtungsringfläche 6 an der Innenwandung der Kappe 1 ist im Verbindungsbereich zwischen der Kappe 1 und dem Flanschansatz 8 ausgebildet und verläuft derart, daß ihr geringster Durchmesser auf Seiten des Kappeninnenraums und ihr größter Durchmesser im Verbindungsbereich zur Buchse 2 liegt. Die Dichtungsringfläche 7 am Innenende der Buchse 2 verläuft spiegelbildlich zu der Kappen-Dichtungsringfläche 6, wobei im Bereich der Spiegelfläche zwischen den beiden Dichtungsringflächen 6 und 7 der Dichtungsring 3 eingesetzt ist, dessen Mittenlängsachse koaxial zur gemeinsamen Mittenlängsachse von Buchse und Kappe verläuft. Der Außendurchmesser des Dichtungsrings 3 und der Verlauf der konischen Dichtungsringflächen 6 und 7 sind dabei derart aufeinander abgestimmt, daß der Dichtungsring 3 unter Einwirkung der Dichtungsringflächen 6 und 7 den Mantel des Kabelendes 5 unter Preßeinwirkung dicht umschließt, sobald Kappe 1 und Buchse 2 auf Anschlag miteinander verschraubt sind.

Zum Einsetzen des Kabelendes 5 in die Abschließvorrichtung wird diese in eine Bereitschaftsstellung verbracht, in welcher die Dichtungsringflächen 6, 7 der Kappe 1 und der Buchse 2 axial so weit voneinander beabstandet sind, daß der bezüglich seines Innendurchmessers an den Außendurchmesser des Kabelendes 5 angepaßte Dichtungsring ohne nennenswerte Preßeinwirkung durch die Dichtungsringflächen 6, 7 axial und radial fixiert ist. Das heißt, daß der Dichtungsring 3 in der Bereitschaftsstellung formschlüssig an den Dichtungsringflächen 6 und 7 anliegt, so daß er beim Einführen des Kabelendes 5 in den Kappeninnenraum positionsstabil gehaltert ist, aufgrund seines entspannten Zustands den Einsetzvorgang jedoch nicht behindert oder unnötig erschwert.

In der Bereitschaftsstellung ist die Verschraubung der Kappe 1 mit der Buchse 2 demnach soweit gelöst, daß das Kabelende 5 problemlos in die Abschließvorrichtung einführbar bzw. die Abschließvorrichtung problemlos auf das Kabelende aufsteckbar ist. Ein Vorteil dieser Abschließvorrichtung besteht dabei darin, daß sie werkseitig vollständig vormontiert ist und in der Bereitschaftsstellung ausgeliefert wird, in welcher sie vor Ort bestimmungsgemäß eingesetzt wird.

Zur Erleichterung der Montage der Abschließvorrichtung auf dem Kabelende 5 ist an der Buchseninnenwandung eine Mehrzahl von Rippen 15 vorgesehen, die in radialer Richtung nach innen vorstehen sowie axial verlaufen und mit ihren axial ausgerichteten Kanten einen ringförmigen Raum zur Aufnahme des Kabelendes 5 festlegen. Die Führungsrippen 15 sind am außenliegenden Einsteckende der Buchse 2 abgeschrägt, wobei hier eine Anfasung 16 gewählt ist, die zum Buchseninnern hin abfällt.

Für die Montage der Abschließvorrichtung vor Ort sind die Außenflächen von Buchse 2 und Kappe 1 mit einem Profil versehen, das einen kraftschlüssigen Angriff durch die Hände einer Bedienungsperson gestattet. Damit aber sind zur Montage der Abschließvorrichtung grundsätzlich keinerlei Werkzeuge erforderlich. Gemäß den Figuren 1 bis 3 ist das Profil auf den Buchsen- und Kappenaußenflächen jedoch derart konfiguriert, daß auch ein kraftschlüssiger Angriff durch ein Werkzeug möglich ist. Zu diesem Zweck besteht das Profil aus Rippen 17a bis 17f, die im Querschnitt oder in Aufsicht gemäß Fig. 3 betrachtet, hexagonal angeordnet sind und in axialer Richtung verlaufen. Ferner ist am Außenende der Kappe 1 ein Sechskantring 18 angeformt, der zum Ansatz eines Schraubenschlüssels geeignet ist.

Die vorstehend im einzelnen beschriebene Abschließvorrichtung besteht also aus zwei miteinander verschraubbaren, rotationssymmetrischen, vorzugsweise Kunststoffteilen, zwischen denen ein dauerelastischer Dichtungsring angeordnet ist. Werkseitig wird die Vorrichtung so vormontiert, daß der Dichtungsring ohne Verspannung zwischen den Kunststoffteilen liegt. Nach Einschieben des Kabelendes werden die beiden Kunststoffteile der Abschließvorrichtung bis auf Anschlag verschraubt, wobei durch die dabei entstehende Verspannung des Dichtungsrings ein feuchtigkeitsdichter Abschluß für das Kabelende erreicht wird.

Um ein Entweichen der Luft aus dem Innenraum der Kappe 1 beim Einführen des Kabelendes 5 zu begünstigen, kann in der Wandung der Kappe 1 wenigstens eine Entlüftungsöffnung angeordnet sein, die nach dem Verschrauben der Kappe 1 mit der Buchse 2 durch den Dichtungsring 3 verschlossen ist.

## Patentansprüche

1. Vorrichtung zum feuchtigkeitsdichten Abschließen eines Kabelendes, mit einer das Kabelende übergreifenden Kappe (1), einer Buchse (2), die über eine Kupplungseinrichtung (8, 10) mit dem offenen Ende der Kappe (1) derart zusammengeschlossen ist, daß ein zwischen der Kappe (1) und der Buchse (2) eingesetzter und das Kabelende (5) umschließender Dichtungsring (3) den Kappeninnenraum, in den das Kabelende (5) hineinragt, dicht verschließt, und mit konischen Dichtungsringflächen (6, 7) an der Innenwandung der Buchse (2) sowie an der Innenwandung der Kappe (1), zwischen die der Dichtungsring (3) eingesetzt ist und den Kappeninnenraum dicht verschließt, wenn bei über die Buchse (2) durch den Dichtungsring (3) hindurch in die Kappe (1) eingeführtem Kabelende (5) die Buchse (2) mittels der Kupplungseinrichtung (8, 10) in Richtung der gemeinsamen Buchsen-Kappen-Mittenlängsachse (11) gegen die Kappe (1) derart verspannt ist, daß der mit ihrer Mittenlängsachse koaxial zur Buchsen-Kappen-Mittenlängsachse (11) angeordnete Dichtungsring (3) das Kabelende (5) unter Preßeinwirkung der Dichtungsringflächen (6, 7) dicht umschließt, wobei Kappe (1) und Buchse (2) zum Einführen des Kabelendes (5) mittels der Kupplungseinrichtung (8, 10) in einer Bereitschaftsstellung gehalten sind, in welcher die Dichtungsringflächen (6, 7) der Kappe (1) und der Buchse (2) axial so weit voneinander beabstandet sind, daß der bezüglich seines Innendurchmessers an den Außendurchmesser des Kabelendes (5) angepaßte Dichtungsring (3) ohne nennenswerte Preßeinwirkung durch die Dichtungsringflächen (6, 7) axial und radial fixiert ist.

2. Vorrichtung nach Anspruch 1,
**dadurch gekennzeichnet, daß**
die Kupplungseinrichtung einen am offenen Kappenende vorgesehenen ringförmigen Flanschansatz (8) mit Innengewinde umfaßt, der auf einen Außengewindeabschnitt (10) an dem offenen Kappenende gegenüberliegenden Buchsenende aufgeschraubt ist.

3. Vorrichtung nach Anspruch 2
**gekennzeichnet durch,**
eine Arretiereinrichtung zum unverlierbaren Verbinden der Buchse (2) mit der Kappe (1) und zum Festlegen der Bereitschaftsstellung.

4. Vorrichtung nach Anspruch 3,
**dadurch gekennzeichnet, daß**
die Arretiereinrichtung ein radial nach innen vorstehender Vorsprung am Kappen-Flanschansatz (8) ist, der einen radial von der Buchsenmantel-Fläche vorstehenden Ring übergreift.

5. Vorrichtung nach Anspruch 1 oder 2,
**gekennzeichnet durch**
eine Anschlageinrichtung (12, 13) zum Festlegen der Abschließstellung.

6. Vorrichtung nach Anspruch 5,
**dadurch gekennzeichnet, daß**
die Anschlageinrichtung einen Ringansatz (12) am Buchsen-Innenende in Verlängerung des Buchsen-Außengewindeabschnitts sowie radial außerhalb der konischen Buchsen-Dichtungsringfläche (7) umfaßt, wobei der Ringansatz (12) zur Festlegung der Abschließstellung in Eingriff mit einer Ringschulter (13) gelangt, die radial außerhalb der konischen Dichtungsringfläche (6) der Kappe (1) an deren Innenwandung angeordnet ist.

7. Vorrichtung nach einem der Ansprüche 2, 5 oder 6,
**gekennzeichnet durch**
einen radial vorstehenden Ringansatz (14) auf der Mantelfläche der Buchse (2), der zumindest in der Abschließstellung von einem außenliegenden Abschnitt des ringförmigen Kappen-Flanschansatzes (8) bündig übergriffen wird.

8. Vorrichtung nach einem der Ansprücche 1 bis 7,
**gekennzeichnet durch**
Rippen (15) zur Führung des Kabelendes (5), die in radialer Richtung nach innen vorstehend sowie axial verlaufend an der Buchsen-Innenwand vorgesehen sind und mit ihren axial verlaufenden Kanten einen ringförmigen Raum zur Aufnahme des Kabelendes (5) festlegen.

9. Vorrichtung nach Anspruch 8,
**dadurch gekennzeichnet, daß**
die Führungsrippen (15) am außenliegenden Einsteckende der Buchse (2) eine zum Buchseninnern hin abfallende Anfasung (16) aufweisen.

10. Vorrichtung nach einem der vorangehenden Ansprüche,
**dadurch gekennzeichnet, daß**
die Außenflächen der Buchse (2) und der Kappe (1) mit einem Profil versehen sind, das einen kraftschlüssigen Angriff von Werkzeug und/oder den Händen einer Bedienungsperson gestattet.

11. Vorrichtung nach Anspruch 10,
**dadurch gekennzeichnet, daß**
das Profil Rippen umfaßt, vor allem im Querschnitt betrachtet hexagonal angeordnete, in axialer Richtung verlaufende Längsrippen (17).

12. Vorrichtung nach einem ver vorangehenden Ansprüche,
**gekennzeichnet durch**
einen am Außenende der Kappe (2) befestigten, vor allem einstückig mit dieser ausgebildeten Schraubenansatz (18).

13. Vorrichtung nach einem der vorangehenden Ansprüche,
**dadurch gekennzeichnet, daß**
sämtliche Vorrichtungsteile bis auf den elastomeren Dichtungsring Spritzgußteile, vor allem Kunststoffteile sind.

14. Vorrichtung nach einem oder mehreren der Ansprüche 1 bis 13,
**gekennzeichnet durch**
wenigstens eine vom Dichtungsring (13) verschließbare Entlüftungseinrichtung.

## Claims

1. Appliance for sealing a cable end in a moisture-tight manner, having a cap (1) engaging over the cable end, a socket (2) which is joined to the open end of the cap (1) by means of a coupling device (8, 10) in such a manner that a sealing ring (3) which is inserted between the cap (1) and the socket (2) and encloses the cable end (5) closes off the interior space of the cap, into which the cable end (5) projects, in a sealed manner, and having conical annular sealing surfaces (6, 7) on the interior wall of the socket (2) and on the interior wall of the cap (1) between which the sealing ring (3) is inserted and closes off the interior space of the cap in a sealed manner, if, in the case of the cable end (5) being introduced into the cap (1) via the socket (2) through the sealing ring (3), the socket (2) is clamped against the cap by means of the coupling device (8, 10) in the direction of the common central longitudinal axis of the socket cap (11) such that the sealing ring (3), its central longitudinal axis being arranged coaxial with reference to the central longitudinal axis of the socket cap (11), encloses the cable end (5) in a sealed manner under the influence of the pressure of the annular sealing surfaces (6, 7), the cap (1) and socket (2) being held in a readiness position for introducing the cable end (5) by means of the coupling device (8, 10), in which readiness position the annular sealing surfaces (6, 7) of the cap (1) and of the socket (2) are spaced so far apart from each other in the axial direction that the sealing ring (3), whose internal diameter is matched to the external diameter of the cable end (5), is axially and radially fixed by means of the annular sealing surfaces (6, 7) without exerting any significant pressure.

2. Appliance according to Claim 1, characterized in that the coupling device comprises an annular flange attachment (8) which is provided at the open end of the cap, has an internal thread, and is screwed onto an externally thread section (10) on the socket end opposite the open cap end.

3. Appliance according to Claim 2, characterized by a locking device for connecting the socket (2) to the cap (1) in a captive manner and for defining the readiness position.

4. Appliance according to Claim 3, characterized in that the locking device is a projection, protruding towards the interior, on the flange attachment (8) of the cap, which projection engages over a ring which protrudes radially away from the surface of the socket casing.

5. Appliance according to Claim 1 or 2, characterized by a stop device (12, 13) for defining the sealed position.

6. Appliance according to Claim 5, characterized in that the stop device comprises an annular attachment (12) on the inner end of the socket in an extension of the section of the external thread of the socket and radially outside the conical annular sealing surface (7) of the socket, the annular attachment (12) engaging with an annular shoulder (13) for defining the sealed position, which shoulder is arranged radially outside the conical annular sealing surface (6) of the cap (1), on its internal wall.

7. Appliance according to one of Claims 2, 5 or 6, characterized by a radially protruding annular attachment (14) on the outer surface of the socket (2), over which, at least in the sealed position, an outer section of the annular flange attachment (8) of the cap engages in a flush manner.

8. Appliance according to one of Claims 1 to 7, characterized by ribs (15) for guiding the cable end (5), which ribs are provided protruding inwards in the radial direction and extending axially on the interior wall of the socket and, with their axially extending edges, define an annular space for accommodating the cable end (5).

9. Appliance according to Claim 8, characterized in that the guide ribs (15) at the outer plug-in end of the socket (2) have a chamfer (16) sloping towards the interior of the socket.

10. Appliance according to one of the preceding claims, characterized in that the outer surfaces of the socket (2) and of the cap (1) are provided with a profile which allows for a force-fitting application of a tool and/or the hands of an operator.

11. Appliance according to Claim 10, characterized in that the profile comprises ribs, above all longitudinal ribs (17) which, seen in cross-section, are arranged in a hexagonal manner, and extend in the axial direction.

12. Appliance according to one of the preceding claims, characterized by a screw attachment (18) which is fastened to the outer end of the cap (2) and, above all, integrally constructed with said cap.

13. Appliance according to one of the preceding claims, characterized in that all the parts of the appliance, with the exception of the elastomeric sealing ring, are injection-moulded parts, above all plastic parts.

14. Appliance according to one or more of Claims 1 to 13, characterized by at least one venting device which can be closed off by the sealing ring (13).

## Revendications

1. Dispositif pour fermer de manière étanche à l'humidité une extrémité de câble, comportant un cabochon (1) s'engageant par-dessus l'extrémité de câble, ainsi qu'une douille (2), qui, par l'intermédiaire d'un dispositif d'accouplement (8, 10), est raccordée à l'extrémité ouverte du cabochon (1) de manière telle, qu'une bague d'étanchéité (3) insérée entre le cabochon (1) et la douille (2), et entourant l'extrémité de câble (5), ferme de manière étanche l'espace intérieur du cabochon dans lequel s'engage l'extrémité de câble (5), le dispositif comportant également des surfaces annulaires d'étanchéité (6, 7) coniques, sur la paroi intérieure de la douille (2) ainsi que sur la paroi intérieure du cabochon (1), entre lesquelles est agencée la bague d'étanchéité (3) en fermant de manière étanche l'espace intérieur du cabochon, lorsqu'après introduction de l'extrémité de câble (5) dans le cabochon (1), par l'intermédiaire de la douille (2), au travers de la bague d'étanchéité (3), la douille (2) est serrée contre le cabochon (1) au moyen du dispositif d'accouplement (8, 10), dans la direction de l'axe longitudinal central (11) commun à la douille et au cabochon, de manière telle, que la bague d'étanchéité (3) disposée de façon à ce que son axe longitudinal central soit coaxial à l'axe longitudinal central (11) de la douille et du cabochon, enserre de manière étanche l'extrémité de câble (5) sous l'effet de compression des surfaces annulaires d'étanchéité (6, 7), le cabochon (1) et la douille (2) étant maintenus, en vue de l'introduction de l'extrémité de câble (5), au moyen du dispositif d'accouplement (8, 10), dans une position d'attente dans laquelle les surfaces annulaires d'étanchéité (6, 7) du cabochon (1) et de la douille (2), sont espacées axialement l'une de l'autre d'une distance telle, que la bague d'étanchéité (3) adaptée, quant à son diamètre intérieur, au diamètre extérieur de l'extrémité de câble (5), soit fixée dans la direction axiale et dans la direction radiale, sans effet de compression notable exercé par les surfaces annulaires d'étanchéité (6, 7).

2. Dispositif selon la revendication 1, caractérisé en ce que le dispositif d'accouplement comprend un flasque d'embase (8) de forme annulaire, prévu à l'extrémité ouverte du cabochon, comportant un filetage intérieur, et vissé sur un tronçon de filetage extérieur (10) sur l'extrémité de la douille, faisant face à l'extrémité ouverte du cabochon.

3. Dispositif selon la revendication 2, caractérisé par un dispositif d'arrêt destiné à relier de manière imperdable la douille (2) au cabochon (1), et à fixer la position d'attente.

4. Dispositif selon la revendication 3, caractérisé en ce que le dispositif d'arrêt est une protubérance faisant saillie radialement vers l'intérieur, sur le flasque d'embase (8) du cabochon, cette protubérance s'engageant par-dessus un anneau faisant saillie radialement de la surface périphérique extérieure de la douille.

5. Dispositif selon la revendication 1 ou 2, caractérisé par un dispositif de butée (12, 13) permettant de localiser la position de fermeture.

6. Dispositif selon la revendication 5, caractérisé en ce que le dispositif de butée comprend une embase annulaire (12) à l'extrémité intérieure de la douille, en prolongement du tronçon fileté extérieur de la douille, ainsi que radialement à l'extérieur de la surface annulaire d'étanchéité (7) conique, de la douille, l'épaulement annulaire (12) venant coopérer, en vue de localiser la position de fermeture, avec un épaulement annulaire (13), qui est agencé radialement à l'extérieur de la surface annulaire d'étanchéité (6) conique, du cabochon (1), sur la paroi intérieure de celui-ci.

7. Dispositif selon l'une des revendications 2, 5 ou 6, caractérisé par une embase annulaire (14) qui fait saillie radialement hors de la surface périphérique extérieure de la douille (2), et qui, tout au moins dans la position de fermeture, est surmontée à ras par un tronçon extérieur du flasque d'embase (8) de forme annulaire, du cabochon.

8. Dispositif selon l'une des revendications 1 à 7, caractérisé par des nervures (15) destinées au guidage de l'extrémité de câble (5), prévues sur la paroi intérieure de la douille en faisant saillie radialement vers l'intérieur et en s'étendant dans la direction axiale, et définissant, avec leurs bords d'étendue axiale, un espace annulaire destiné à recevoir l'extrémité de câble (5).

9. Dispositif selon la revendication 8, caractérisé en ce que les nervures de guidage (15) présentent un chanfrein (16) à l'extrémité extérieure d'insertion de la douille (2), le chanfrein se réduisant en direction de l'intérieur de la douille.

10. Dispositif selon l'une des revendications précédentes, caractérisé en ce que les surfaces extérieures de la douille (2) et du cabochon (1) sont pourvues d'un profil, qui permet une prise par adhérence d'un outil et/ou des mains d'un utilisateur.

11. Dispositif selon la revendication 10, caractérisé en ce que le profil comprend des nervures, notamment des nervures longitudinales (17) disposées de manière hexagonale dans la section droite, et s'étendant dans la direction axiale.

12. Dispositif selon l'une des revendications précédentes, caractérisé par un embout de vissage (18) fixé à l'extrémité extérieure du cabochon (1), et notamment réalisé d'un seul tenant avec celui-ci.

13. Dispositif salon l'une des revendications précédentes, caractérisé en ce que toutes les pièces du dispositif, exceptée la bague d'étanchéité en un élastomère, sont des pièces moulées par injection, et notamment des pièces en matière plastique.

14. Dispositif selon l'une ou plusieurs des revendications 1 à 13, caractérisé par un dispositif de purge pouvant être obturé par la bague d'étanchéité (3).
